# EUROPEAN PATENT APPLICATION

(11) **EP 3 188 304 A1**
(43) Date of publication of application: **05.07.2017**
(21) Application number: 15836098.2
(22) Date of filing: 18.06.2015
(51) Int. Cl.: H01M 10/63, H01M 10/42, H01M 10/65, H01M 10/6556, H01M 10/655, H01M 10/6568, H01M 10/66

(54) **ENERGY STORAGE SYSTEM**

(30) Priority: 28.08.2014 KR 20140112785; 15.01.2015 KR 20150007290
(71) Applicant: Orange Power Ltd., Daejeon 305-509 (KR)
(72) Inventor: HONG, Young Jin, Daejeon 305-756 (KR); LEE, Young Jae, Daejeon 305-722 (KR); LEE, Sung Keun, Daejeon 305-739 (KR); KANG, Soon Sun, Seoul 158-776 (KR); KIM, Chul Hwan, Daejeon 302-765 (KR)
(74) Representative: Vossius & Partner Patentanwälte Rechtsanwälte mbB
(86) International application number: PCT/KR2015/006162
(87) International publication number: WO 2016/032101

(57) **Abstract**

The present invention provides an energy storage system comprising: a battery module formed by connecting a plurality of hollow secondary batteries that have hollow tubes therein, respectively; a safety module that includes a cooling/heating unit that stores a cooling/heating medium therein and an extinguishing unit that stores an extinguishing medium therein; a first circulation channel that interconnects the battery module and the safety module to circulate the cooling/heating medium or the extinguishing medium between the battery module and the safety module; and a battery management system that measures the temperature and pressure of the battery module and opens the cooling/heating unit or the extinguishing unit to supply the cooling/heating medium or the extinguishing medium to the first circulation channel when the temperature and pressure of the battery module reaches a preset value.

## Description

### CROSS-REFERENCE TO RELATED APPLICATIONS

A claim for priority under 35 U.S.C. § 119 is made to Korean Patent Application 10-2014-0112785 filed on August 28, 2014, and 10-2015-0007290 filed on January 15, 2015 in the Korean Intellectual Property Office, the entire contents of which are hereby incorporated by reference.

### BACKGROUND

Embodiments of the inventive concept described herein relate to an energy storage system, and more particularly to, an energy storage system that may efficiently extinguish or cools a battery module that includes a plurality of hollow secondary batteries.

In recent years, high-output secondary batteries using a non-aqueous electrolyte of a high-energy density have been developed, and the high-output secondary batteries are connected in series to each other to constitute a high-capacity secondary battery so that they may be used for driving motors of devices that require high electric power, for example, electric vehicles.

In this way, one secondary battery generally includes a plurality of secondary batteries that are connected in series to each other, and each unit battery includes an electrode assembly in which a positive electrode plate and a negative electrode plate are located while a separator is interposed therebetween, a case that includes a space in which the electrode assembly is embedded, a cap assembly that is coupled to the case to seal the case, and positive and negative electrode terminals that protrudes to the cap assembly and are electrically connected to collectors of the positive and negative electrode plates provided in the electrode assembly.

Here, because one electrode module is constituted by connecting several to several tens of unit batteries, heat generated by the unit batteries has to be easily discharged. Further, the charging and discharging characteristics of the battery remarkably deteriorates due to a high internal resistance at a low temperature, and if the battery continues to be used at a low temperature, the life span of the battery also deteriorates.

When the heat is not properly discharged, for example, the heat generated by the unit battery causes rising of the temperature of the battery module, and as a result, the device to which the battery module is applied may malfunction. In particular, the HEV battery module used for vehicles charges and discharges a high current, heat is generated by an internal reaction of the secondary battery according to an in-use state thereof such that the temperature of secondary batteries increases to a considerable value, which influences the natural characteristics of the battery, deteriorating the natural performance of the battery. Further, the charging and discharging characteristics of the battery remarkably deteriorates due to a high internal resistance at a low temperature, and if the battery continues to be used at a low temperature, the life span of the battery also deteriorates.

Accordingly, a battery management system is applied to the HEV battery module applied to a vehicle to maintain the temperature of the battery module in a suitable state and prevent damage to the battery and a safety accident due to the damage to the battery.

However, according to the related art, overcharging of the battery is prevented such that the battery is properly operated during a normal operation of the battery management system but if the battery management system malfunctions, the battery may be damaged due to the overcharging thereof or may cause a safety accident such as a fire or an explosion, so that when a fire occurs in the battery module, it is difficult to properly cope with the accident.

That is, the temperature of the conventional battery module is managed by the battery management system, but if a safety accident such as a fire occurs, it cannot be promptly coped with as there is no fire extinguishing means provided.

### SUMMARY

Embodiments of the inventive concept provide an energy storage system that includes a new hollow secondary battery that may increase an air conditioning efficiency of hot air or cold air supplied from an air conditioner.

In accordance with a first embodiment of the inventive concept, there is provided an energy storage system including: a battery module, to which a plurality of hollow secondary batteries, each of which has a hollow pipe therein, are connected; a safety module that includes a cooling unit that stores a cooling medium and a fire extinguishing unit that stores a fire extinguishing medium; a first circulation passage that interconnects the battery module and a safety module such that the cooling medium or the fire extinguishing medium circulates between the battery module and the safety module; and a battery management system that measures a temperature and a pressure of the battery module such that the cooling medium or the fire extinguishing medium is supplied to the first circulation passage by opening the cooling unit or the fire extinguishing unit when the temperature and the pressure of the battery module reaches preset values.

Here, the first circulation passage may include: a first passage that interconnects one end of the safety module and a pipe of the hollow secondary battery, which is located at one end of the battery module; and a secondary passage that connects an opposite end of the safety module and a pipe of the hollow secondary battery, which is located at an opposite end of the battery module.

In accordance with a second embodiment of the inventive concept, there is an energy storage system including: \a housing; a battery module that includes a plurality of hollow secondary batteries, each of which has a hollow pipe therein, and is installed in the interior of the housing to be spaced apart from each other; an air conditioner that is installed between the battery modules to generate air, of which a temperature has been adjusted; and second circulation passages that connect the air conditioner and the plurality of battery modules such that air generated by the air conditioner circulates between the battery modules and the air conditioner.

Here, the second circulation passages may include: a third passage that is branched to a plurality of passages on one side of the air conditioner to be connected to sides of the battery modules; and fourth passages that extend from opposite sides of the battery modules towards the air conditioner.

Here, fifth passages that extend to the outside of the housing may be installed at sides of the fourth passages and vents that selectively open or close the fifth passages may be installed in the fifth passages.

Here, the fourth passages may merge into one pipe at a specific location for simplifying the structure thereof and smoothing flows of air and may extend to the air conditioner.

Meanwhile, the fire detector may be installed in the interior of the housing.

Further, the energy storage system according to the second embodiment may further include: a safety module that is installed on one side of the air conditioner such that the air conditioner supplies the cooling medium and/or the fire extinguishing medium together with air to the battery modules by supplying the cooling medium and/or the fire extinguishing medium to the air conditioner when a fire occurs.

Meanwhile, the fire extinguishing medium may be any one of water, loaded stream liquid, chemical bubbles, air bubbles, carbon dioxide, a halide, sodium hydrogen carbonate, potassium hydrogen carbonate, urea potassium hydrogen carbonate, ammonium phosphate, and aqueous film forming bubbles.

### BRIEF DESCRIPTION OF THE FIGURES

The above and other objects and features will become apparent from the following description with reference to the following figures, wherein like reference numerals refer to like parts throughout the various figures unless otherwise specified, and wherein:
Figs. 1 and 2 are views illustrating an overall structure of an energy storage system according to a first embodiment of the inventive concept;
Fig. 3 is a view illustrating an overall structure of an energy storage system according to a second embodiment of the inventive concept;
Fig. 4 is a view illustrating flows of air in a state in which a fifth passage is closed by a vent according to the inventive concept; and
Fig. 5 is a view illustrating flows of air in a state in which the fifth passage is opened by the vent according to the inventive concept.

### DETAILED DESCRIPTION

Hereinafter, exemplary embodiments of the inventive concept for realizing the objects in detail will be described with reference to the accompanying drawings. In a description of the embodiments of the inventive concept, the same titles and reference numerals are used for the same configurations and an additional description thereof will be omitted.

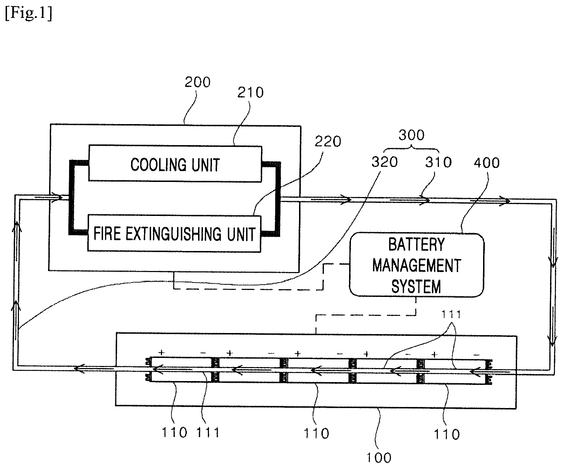

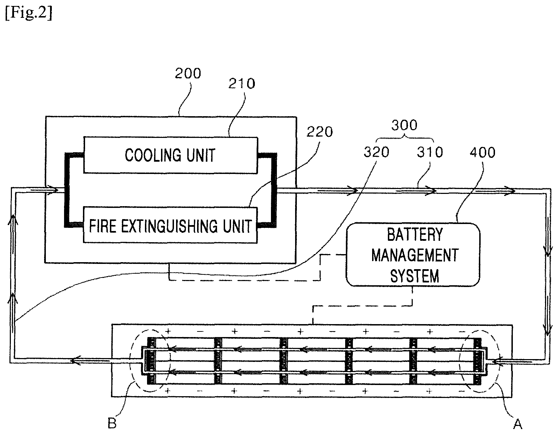

Figs. 1 and 2 are views illustrating an overall structure of an energy storage system according to a first embodiment of the inventive concept.

As illustrated in Figs. 1 and 2, the energy storage system according to the first embodiment of the inventive concept includes a battery module 100, a safety module 200, a first circulation passage 300, and a battery management system 400.

The battery module 100 is formed by interconnecting a plurality of hollow secondary batteries 110, each of which includes a hollow pipe 111 therein. The hollow secondary batteries 110 correspond to a secondary battery that has a hollow portion therein, which is disclosed in Korean Patent Application (Korean Application No. 10-2014-0071943) by the inventors of the present application on June 13, 2014, but the inventive concept is not limited thereto.

Here, the plurality of hollow secondary batteries 110 may be connected in series to each other as illustrated in Fig. 1 such that the pipes 111 are communicated with each other. Of course, when the plurality of hollow secondary batteries 110 are disposed as in Fig. 2, the pipes 111 of the hollow secondary batteries 110 located at opposite ends of the battery module 100 may be communicated with each other by using first and second connection pipes A and B.

The safety module 200 includes a cooling unit 210 and a fire extinguishing unit 220.

The cooling unit 210 stores a cooling medium that is supplied to lower a temperature of the battery module 100, to which the plurality of hollow secondary batteries 110 are connected, when the battery module 100 is overheated, ignited, or fumed. The type of the cooling medium may be any one of cooling air or a cooling solution, and both of them may be applied if necessary.

The fire extinguishing unit 220 stores a fire extinguishing medium that is supplied to extinguish fire when the battery module 100 is overheated, ignited, or fumed. The fire extinguishing medium may be, if necessary, any one of water, loaded stream liquid, chemical bubbles, air bubbles, carbon dioxide, a halide, sodium hydrogen carbonate, potassium hydrogen carbonate, urea potassium hydrogen carbonate, ammonium phosphate, and aqueous film forming bubbles, but the inventive concept is not limited thereto.

The first circulation passage 300 interconnects the safety module 200 and the battery module 100 such that the cooling medium or the fire extinguishing medium stored in the safety module 200 may circulate between the battery module 100 and the safety module 200.

The first circulation passage 300 includes a first passage 310 and a second passage 320.

The first passage 300 interconnects one end of the safety module 200 and a pipe 111 of the hollow secondary battery, which is located at one end of the battery module 100, such that the cooling medium or the fire extinguishing medium may be supplied to the pipe 111 of the hollow secondary battery that is communicated with the cooling unit 210 or the fire extinguishing unit 220.

The second passage 320 connects an opposite end of the safety module 200 and a pipe 111 of the hollow secondary battery, which is located at an opposite end of the battery module 100, such that the cooling medium or the fire extinguishing medium that sequentially passed through the pipes 111 of the hollow secondary battery may be retrieved by the safety module 200, that is, the cooling unit 210 or the fire extinguishing unit 220.

Accordingly, after being introduced into the pipe 111 of the hollow secondary battery along the first passage 310 of the safety module 300, the cooling medium or the fire extinguishing medium cools the battery module 100 while sequentially passing through the pipes 111 of the hollow secondary battery and then is retrieved by the safety module 200, that is, the cooling unit 210 or the fire extinguishing unit 220 along the second passage 320.

Here, when the pipes 111 of the hollow secondary batteries 110, which are located adjacent to opposite ends of the battery module 100, are communicated with first and second connection pipes A and B, respectively, the first passage 310 is connected to the first connection pipe A and the second passage 320 is connected to the second connection pipe B (see Fig. 2).

The battery management system 400 monitors a temperature and a pressure of the battery module 100, and supplies the fire extinguishing medium or the cooling medium stored in the safety module 200 to the first circulation passage 300 when the battery module 100 is overheated, ignited, or fumed.

In detail, when the temperature and the pressure of the battery module 100 reach preset values (a reference operation temperature: 125°C and a reference operation pressure: 18.5 kgf/cm²), the battery management system 400 controls a valve (not illustrated) such that the cooling medium or the fire extinguishing medium may be supplied to the first circulation passage 300 by opening the cooling unit 210 or the fire extinguishing unit 220.

Then, the battery management system 400 may selectively open the cooling unit 210 or the fire extinguishing unit 220 if necessary or open the fire extinguishing unit 220 and the cooling unit 210 at the same time such that the cooling medium and the fire extinguishing medium may be supplied to the pipe 111 of the hollow secondary battery through the first passage 111.

Accordingly, because the cooling unit 210 or the fire extinguishing unit 220 is automatically opened by the battery management system 400 such that the cooling medium or the fire extinguishing medium may be supplied to the battery module 100 when the temperature and the pressure of the battery module 100 increases to preset values or a fire occurs, a safety accident may be prevented in advance by preventing overheating or a fire of the battery module 100.

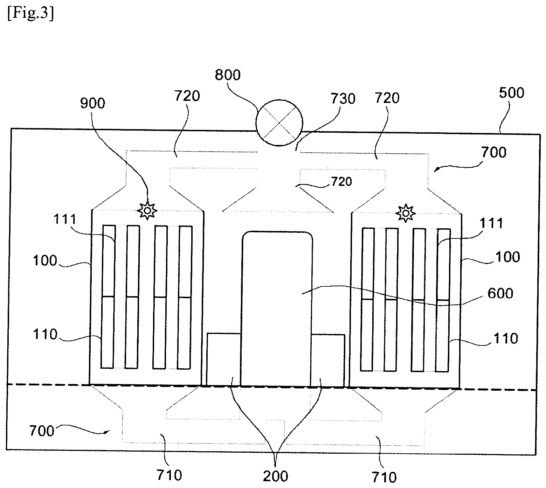

Fig. 3 is a view illustrating an overall structure of an energy storage system according to a second embodiment of the inventive concept.

As illustrated in Fig. 3, the energy storage system according to the second embodiment of the inventive concept includes a housing 500, a battery module 100, an air conditioner 600, a second circulation passage 700, and a safety module 200.

The housing 500 accommodates the battery module 100, the second circulation passage 700, the safety module 200, and the air conditioner 600 therein. It is preferable that the housing 500 be formed of a material of a high strength to prevent an explosion or other safety accidents that may be caused by a fire of the battery module 100.

The battery module 100 has a plurality of hollow secondary batteries 110 that includes hollow portions 111 therein, respectively, and a plurality of battery modules 100 are installed in the interior of the housing 500 to be spaced apart from each other by a specific interval. The structure of the battery modules 100 is the same as that of the first embodiment, and thus a detailed description thereof will be omitted.

The air conditioner 600 is installed between the plurality of battery modules 100 to generates air, of which a temperature has been adjusted.

The second circulation passage 700 interconnects the air conditioner 600 and the plurality of battery modules 100 such that the air generated by the air conditioner 600 may circulate between the battery modules 100 and the air conditioner 600.

The second circulation passage 700 includes a third passage 710 and fourth passages 720.

The third passage 710 is branched to a plurality of passages at one side of the air conditioner 600 to be connected to sides of the battery modules 100. Accordingly, the air generated by the air conditioner 600 flows into the battery modules 100 along the third passages 710.

The fourth passages 720 extend from opposite sides of the battery modules 100 towards the air conditioner 600, respectively. Accordingly, the air that passed through the interior of the battery modules 100 flows to the air conditioner 600 along the fourth passages 720.

Here, it is preferable that the fourth passages 720 that extend from the battery modules 100, respectively, merge into one pipe at a specific location for simplifying the structure thereof and smooth flows of the air and extend to the air conditioner 600.

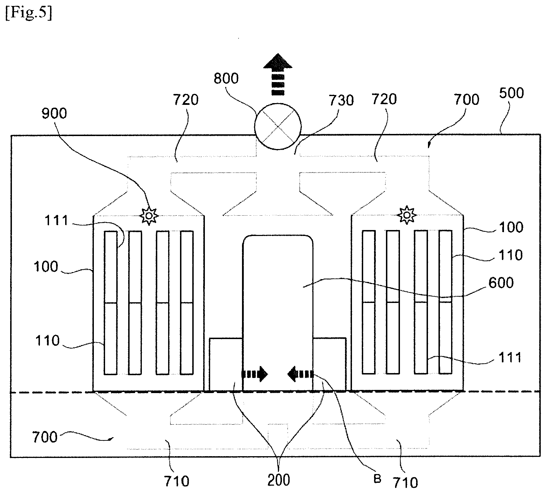

The safety module 200 is installed on one side of the air conditioner 600 to supply the cooling medium and/or the fire extinguishing medium B stored in the interior thereof when a fire occurs such that the air conditioner 600 may supply the cooling medium and/or the fire extinguishing module to the battery module 100 together with air as illustrated in Fig. 5. An interior structure of the safety module 200 is the same as that of the first embodiment, and thus a detailed description thereof will be omitted.

Meanwhile, a fifth passage 730 that extends to the outside of the housing 500 is installed on one side of the fourth passages 720, and a vent 800 that selectively opens or closes the fifth passage 730 is installed in the fifth passage 730.

The vent 800 opens the fifth passage 730 such that mixture air containing fumed, the cooling medium, and/or the fire extinguishing medium may be discharged to the outside of the housing 500, thereby preventing damage to properties and the life of a user due to toxic gases when a fire occurs in the battery module 100.

Of course, the vent 800 may discharge air of a high temperature, of which has been increased while the air passes through the battery module 100, to the outside of the housing 500, by opening the fifth passage 730 to improve cooling efficiency even when a fire does not occur.

Meanwhile, a fire detector 900 may be installed in the interior of the housing 500. The fire detector 900 is installed between the hollow secondary battery 110 and the third passage 710 or between the hollow secondary battery 110 and the fourth passage 720 as illustrated to detect a fire. The fire detector 900 includes a differential detector that uses expansion of air and a thermal detector that uses accumulation of heat.

An operation of the energy storage system according to the second embodiment of the inventive concept will be described in the following briefly.

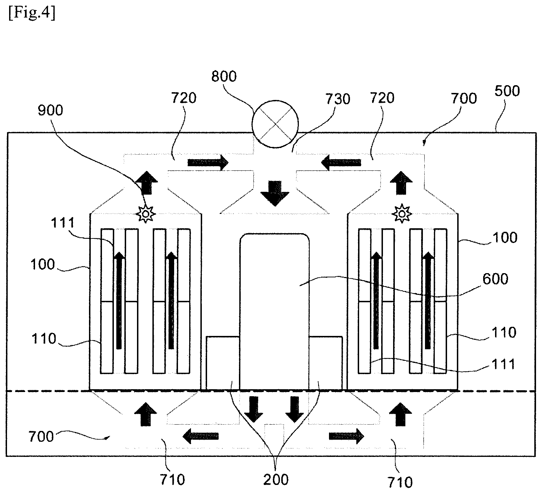

Fig. 4 is a view illustrating flows of air in a state in which the fifth passage is closed by a vent according to the inventive concept, and Fig. 5 is a view illustrating flows of air in a state in which the fifth passage is opened by the vent according to the inventive concept.

First, in a normal state, that is, if a separate signal is not input from the fire detector 900, as illustrated in Fig. 4, the fifth passage 730 is closed by using the vent 800 and then air is generated by operating the air conditioner 600. As the fifth passage 730 is closed, the air generated by the air conditioner 600 sequentially flows to the third passage 710, the battery module 100, the fourth passage 720, and the air conditioner 600.

Here, the air introduced into the battery module 100 along the third passage 710 cools the battery modules 100 while passing through the pipes 111 of the hollow secondary batteries 110 and is introduced into the fourth passages 720.

Further, when a fire occurs in the battery module 100, that is, a fire signal is received from the fire detector 900, as illustrated in Fig. 5, the cooling medium and/or the fire extinguishing medium B and the air are supplied into the battery modules 100 together through the third passage 710 by operating the safety module 200 and the air conditioner 600 after opening the fifth passage 730 by using a vent 800.

In this case, the air that further contains toxic gases and smoke while passing through the interior of the battery modules 100 does not flow to the air conditioner 600 via the fourth passages 720 but is discharged to the outside of the housing 500 through the opened fifth passage 730 as illustrated in Fig. 5.

According to the inventive concept, hot air or cold air supplied from the air conditioner may be made to circulate only in a plurality of hollow secondary batteries by providing a circulation passage that communicates the battery module and the air conditioner. Accordingly, the air conditioning efficiency may increase and the costs for the air conditioner and management of the air conditioning may be reduced.

Further, according to the inventive concept, there occurs an abnormality in the interior of the battery module including the fire detector and the vent, the battery may be efficiently protected when a fire occurs or the battery is fumed, by supplying the cooling medium and the fire extinguishing medium to the interior of the battery module.

It is noted that the detailed description of the inventive concept is made only to exemplarily describe the inventive concept and help understanding of the inventive concept and is not intended to determine the scope of the inventive concept. The scope of the inventive concept is determined by the annexed claims, and it should be understood that simple modifications or changes of the inventive concept also pertain to the scope of the inventive concept.

## Claims

1. An energy storage system comprising:
a battery module, to which a plurality of hollow secondary batteries, each of which has a hollow pipe therein, are connected;
a safety module that comprises a cooling unit that stores a cooling medium and a fire extinguishing unit that stores a fire extinguishing medium;
a first circulation passage that interconnects the battery module and a safety module such that the cooling medium or the fire extinguishing medium circulates between the battery module and the safety module; and
a battery management system that measures a temperature and a pressure of the battery module such that the cooling medium or the fire extinguishing medium is supplied to the first circulation passage by opening the cooling unit or the fire extinguishing unit when the temperature and the pressure of the battery module reaches preset values.

2. The energy storage system of claim 1, wherein the first circulation passage comprises:
a first passage that interconnects one end of the safety module and a pipe of the hollow secondary battery, which is located at one end of the battery module; and
a secondary passage that connects an opposite end of the safety module and a pipe of the hollow secondary battery, which is located at an opposite end of the battery module.

3. The energy storage system of claim 1, wherein the fire extinguishing medium is any one of water, loaded stream liquid, chemical bubbles, air bubbles, carbon dioxide, a halide, sodium hydrogen carbonate, potassium hydrogen carbonate, urea potassium hydrogen carbonate, ammonium phosphate, and aqueous film forming bubbles.

4. The energy storage system of claim 1, wherein the cooling medium is any one of cooling air and a cooling solution.

5. An energy storage system comprising:
a housing;
a battery module that comprises a plurality of hollow secondary batteries, each of which has a hollow pipe therein, and is installed in the interior of the housing to be spaced apart from each other;
an air conditioner that is installed between the battery modules to generate air, of which a temperature has been adjusted; and
second circulation passages that connect the air conditioner and the plurality of battery modules such that air generated by the air conditioner circulates between the battery modules and the air conditioner.

6. The energy storage system of claim 5, wherein the second circulation passages comprise:
a third passage that is branched to a plurality of passages on one side of the air conditioner to be connected to sides of the battery modules; and
fourth passages that extend from opposite sides of the battery modules towards the air conditioner.

7. The energy storage system of claim 6, wherein fifth passages that extend to the outside of the housing are installed at sides of the fourth passages and vents that selectively open or close the fifth passages are installed in the fifth passages.

8. The energy storage system of claim 6, wherein the fourth passages merge into one pipe at a specific location for simplifying the structure thereof and smoothing flows of air and extend to the air conditioner.

9. The energy storage system of claim 5, wherein a fire detector is installed in the interior of the housing.

10. The energy storage system of claim 5, further comprising:
a safety module that is installed on one side of the air conditioner such that the air conditioner supplies the cooling medium and/or the fire extinguishing medium together with air to the battery modules by supplying the cooling medium and/or the fire extinguishing medium to the air conditioner when a fire occurs.

11. The energy storage system of claim 10, wherein the fire extinguishing medium is any one of water, loaded stream liquid, chemical bubbles, air bubbles, carbon dioxide, a halide, sodium hydrogen carbonate, potassium hydrogen carbonate, urea potassium hydrogen carbonate, ammonium phosphate, and aqueous film forming bubbles.
